# DEMANDE DE BREVET EUROPEEN

(11) **EP 4 560 984 A1**
(43) Date de publication de la demande: **28.05.2025**
(21) Numéro de dépôt: 24214556.3
(22) Date de dépôt: 21.11.2024
(51) Int. Cl.: H04L 12/18, H04L 9/40

(54) **PROCÉDÉ DE MULTIDIFFUSION UNIDIRECTIONNELLE DIRECT SÉCURISÉ DE MESSAGES DANS UN RÉSEAU DE COMMUNICATION METTANT EN UVRE UN PROTOCOLE DE MULTIDIFFUSION**

(30) Priorité: 23.11.2023 FR 2312940
(71) Demandeur: THALES, 92190 Meudon (FR)
(72) Inventeur: AUGE, Emmanuel, 49309 Cholet Cedex (FR)
(74) Mandataire: Atout PI Laplace

(57) **Abrégé**

L'invention porte sur un procédé de multidiffusion unidirectionnelle direct de messages (1) dans un réseau de communication mettant en oeuvre un protocole de multidiffusion unidirectionnelle direct, dans lequel on ajoute des paramètres additionnels (2) en entête d'un message basé sur le protocole de multidiffusion mis en oeuvre, les paramètres additionnels (2) comprenant :
- un type du protocole de multidiffusion ;
- une version du protocole de multidiffusion ;
- une protection assurée pour le message comprenant l'intégrité et l'authenticité et/ou la confidentialité et/ou l'anti-rejeu ;
- un type de certificat utilisé par l'émetteur du message ;
- une longueur du certificat ;
- un certificat de l'émetteur du message ;
- une longueur de la signature du message ; et
- une signature du message.

## Description

L'invention porte sur un procédé de multidiffusion ou diffusion multiple de messages dans un réseau de communication mettant en oeuvre un protocole de diffusion multiple, ou "multicast" ou "broadcast" en langue anglaise.

L'invention concerne tout système nécessitant une multidiffusion directe d'information sans nécessiter d'identifier les récepteurs potentiellement intéressés

Dans de nombreux cas d'usage, il peut être utile de diffuser de l'information sans que les récepteurs potentiels soient connus ou identifiables à l'avance (données de configuration globale, logs, heure, messages opératifs, informatifs, ...) et sans possibilité de mise en oeuvre d'un service de diffusion à partir d'un serveur de diffusion applicatif monodiffusion ou "unicast" en langue anglaise.

L'intégrité et l'origine des informations peuvent être des critères important pour de tels systèmes.

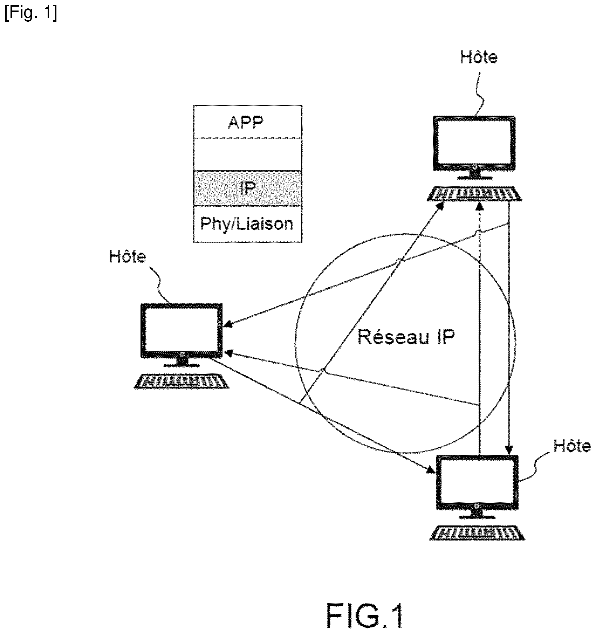

Par exemple, le protocole BSR (RFC 5059) permet dans le cadre du routage IP dynamique à multidiffusion, ou "multicast" en langue anglaise, tel qu'illustré sur la [Fig.1], de configurer tous les routeurs d'un réseau IP multicast. Pour cela des messages BSM, pour acronyme de "BootStrap Message" en langue anglaise, sont diffusés par le routeur BSR ou "BootStrap Router" en langue anglaise, afin de distribuer vers tous les routeurs l'ensemble des éléments de configuration (adresses des Rendez-vous Point, adresses multicast associées, ...). Ces messages sont aujourd'hui diffusés de manière non sécurisée, ce qui représente une vulnérabilité importante du standard et donc des réseaux. N'importe quelle machine peut forger des messages et les diffuser pour modifier la configuration du réseau; Il en est de même pour d'autres mécanismes similaires propriétaires (CISCO : "Auto_RP").

Un protocole de diffusion direct a pour avantage d'être mis en oeuvre au niveau liaison ou routage, donc sans nécessiter de serveur applicatif, et permet une économie de bande passante. L'utilisation de ce protocole pose des problèmes de sécurité liés à la maîtrise de la diffusion.

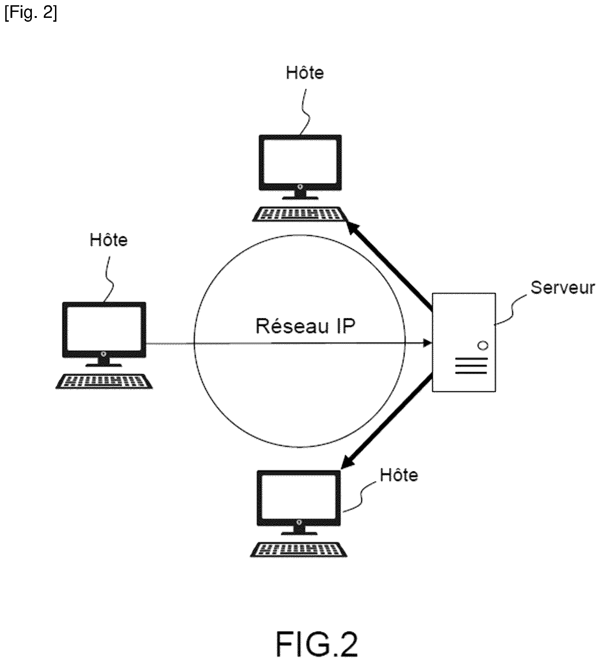

Pour les échanges directs en point à point ou en point multipoints, tel qu'illustré sur le [Fig.2], il existe différents protocoles d'échanges sécurisés (TLS, IPsec, ...). Ces protocoles nécessitent au préalable la distribution de secrets, soit par négociation bidirectionnelle de secrets de protection, soit par partage de secrets communs. Ces principes peuvent s'avérer compliqués lorsque les interlocuteurs ne sont pas toujours connus ou changent fréquemment.

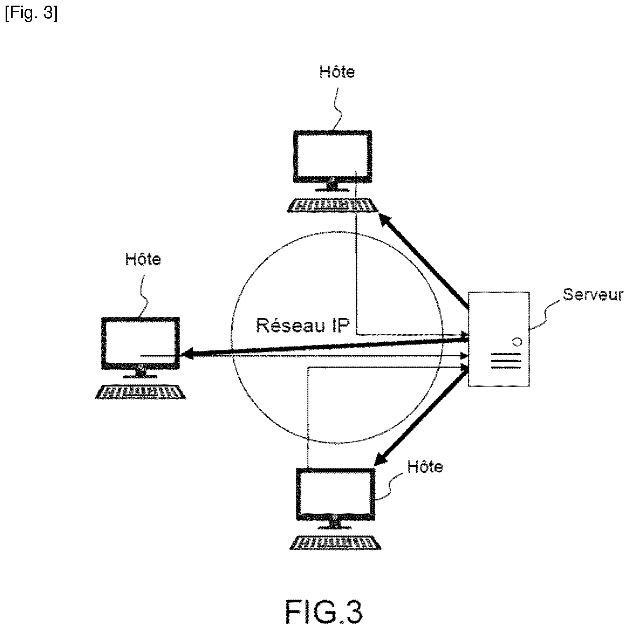

Il existe d'autres modes de diffusion sécurisés, comme illustré sur la [Fig.3], (messageries, conférences, communications collaboratives, ...), mais qui s'appuient sur des services applicatifs et des échanges en unicast (en étoile sur un serveur applicatif).

Un tel protocole de diffusion par service applicatif permet une grande richesse de services, cependant les échanges directs point à point ou "unicast" en langue anglaise qu'ils engendrent, surchargent le réseau du fait de la duplication des informations de bout en bout.

La diffusion sécurisée sans service applicatif dans un périmètre technique non maîtrisable dans l'espace et dans le temps (évolutif) est complexe car cela nécessite une connaissance des modifications techniques au sein du périmètre et des actions de configurations fréquentes. Les protocoles de sécurisation, lorsqu'ils existent, sont soit mis en oeuvre directement et de manière bidirectionnelle entre les émetteurs et les récepteurs pour les échanges non applicatifs, soit mis en oeuvre via des services de diffusion unicast applicatifs (exemple : messagerie sécurisée, visioconférence).

Dans le cadre d'un protocole à multidiffusion direct, tel le protocole BSR, la sécurisation est difficile car les échanges s'effectuent au niveau protocolaire IP et les interlocuteurs destinataires ne sont pas connus et tous directement accessibles (relayage des messages de proche en proche).

Un but de l'invention est de pallier les problèmes précédemment cités.

Il est proposé, selon un aspect de l'invention, un procédé de multidiffusion unidirectionnelle direct de messages dans un réseau de communication mettant en oeuvre un protocole de multidiffusion, dans lequel on ajoute des paramètres additionnels en entête d'un message basé sur le protocole de multidiffusion mis en oeuvre, les paramètres additionnels comprenant :
- un type du protocole de multidiffusion ;
- une version du protocole de multidiffusion ;
- une protection assurée pour le message, comprenant l'intégrité et l'authenticité et/ou la confidentialité et/ou l'anti-rejeu ;
- un type de certificat utilisé par l'émetteur du message ;
- une longueur du certificat ;
- un certificat de l'émetteur du message ;
- une longueur de la signature du message ; et
- une signature du message.

Dans un mode de réalisation, les paramètres additionnels comprennent un type de message parmi un message nécessitant une sécurité ou non.

Selon un mode de réalisation, les paramètres additionnels comprennent, en cas d'utilisation d'une pluralité d'algorithmes cryptographiques l'identifiant de chaque algorithme cryptographique et les paramètres associés.

Dans un mode de réalisation, les paramètres additionnels comprennent un compteur anti-rejeu.

Selon un mode de réalisation, les paramètres additionnels comprenant le compteur anti-rejeu, les paramètres additionnels comprennent une signature du compteur anti-rejeu.

Dans un mode de réalisation, des contrôles de sécurité effectués par des machines du réseau de communication utilisent un certificat d'une même autorité de certification.

Selon un mode de réalisation, le protocole de multidiffusion est un protocole de contrôle du routage.

Par exemple, le protocole de contrôle du routage est un protocole PIM, ou BSR, ou IGMP, ou MLD, ou OSPF.

Dans un mode de réalisation, le protocole de multidiffusion est un protocole de trafic.

Par exemple, le protocole de trafic est un protocole SYSLOG, ou Auto-RP, ou VLC multicast.

L'invention sera mieux comprise à l'étude de quelques modes de réalisation décrits à titre d'exemples nullement limitatifs et illustrés par les dessins annexés sur lesquels :
[Fig.1] illustre schématiquement un protocole de diffusion multiple IP directe multi-directionnelle en point multipoints n'utilisant pas de serveur applicatif , selon l'état de la technique ;
[Fig.2] illustre schématiquement un protocole de diffusion multiple IP indirecte uni-directionnelle en point multi-points utilisant un serveur applicatif, selon l'état de la technique ;
[Fig.3] illustrent schématiquement un protocole de diffusion multiple IP indirecte uni-directionnelle en point multi-points utilisant un serveur applicatif, selon un aspect de l'invention ;
[Fig.4] illustre schématiquement un message du protocole de multidiffusion, selon un aspect de l'invention; et
[Fig.5] illustre schématiquement le fonctionnement du protocole de la [Fig4].

Sur l'ensemble des figures, les éléments ayant des références identiques sont similaires.

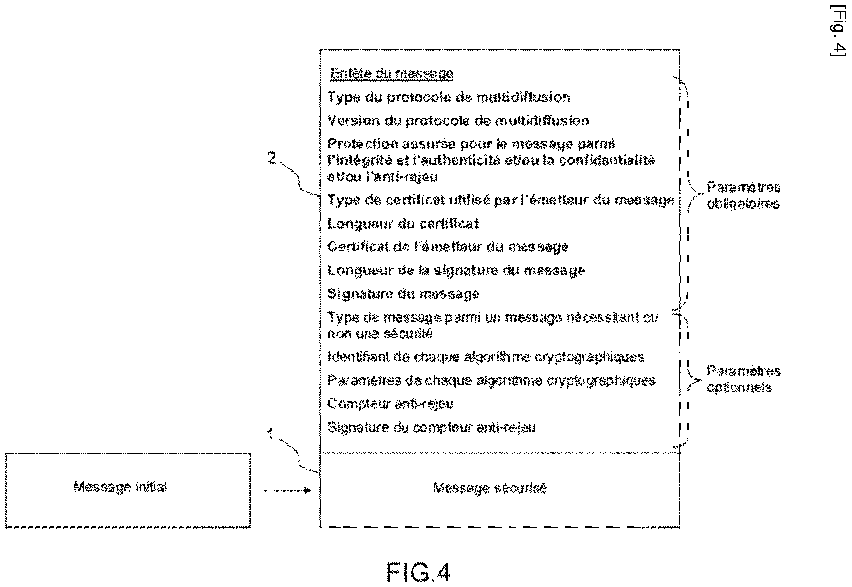

La [Fig.4] illustre schématiquement le procédé selon un aspect de l'invention.

Le procédé de multidiffusion unidirectionnelle direct de messages 1 dans un réseau de communication mettant en oeuvre un protocole de diffusion unidirectionnelle direct, dans lequel on ajoute des paramètres additionnels 2 en entête d'un message basé sur le protocole de multidiffusion mis en oeuvre, les paramètres additionnels 2 comprenant :
- un type du protocole de multidiffusion ;
- une version du protocole de multidiffusion ;
- une protection assurée pour le message, comprenant l'intégrité et l'authenticité et/ou la confidentialité et/ou l'anti-rejeu ;
- un type de certificat utilisé par l'émetteur du message ;
- une longueur du certificat ;
- un certificat de l'émetteur du message ;
- une longueur de la signature du message ; et
- une signature du message.

Un intérêt du procédé de l'invention est notamment de pouvoir protéger au minimum en intégrité et en authenticité et éventuellement en confidentialité et/ou en anti-rejeu les messages diffusés vers des interlocuteurs multiples, hétérogènes, non identifiables et non localisables, et accessibles sans service applicatif.

En outre, chaque message diffusé dispose des informations nécessaires à son contrôle sans échange préalable de secrets entres les différents protagonistes.

Le message diffusé peut également être protégé en confidentialité afin qu'il puisse être traité par une des machines réceptrices (chiffrement asymétrique).

Le message diffusé peut également être protégé en anti-rejeu afin qu'il ne puisse pas être rejoué dans le temps.

Ce mode de diffusion sécurisé permet de satisfaire de nombreux échanges de données directs ou par relayage, non déterministes mais sensibles en intégrité et origine.

Les paramètres additionnels 2 peuvent comprendre un type de message parmi un message nécessitant une confidentialité ou non.

Les paramètres additionnels 2 peuvent comprendre, en cas d'utilisation d'une pluralité d'algorithmes cryptographiques l'identifiant de chaque algorithme cryptographique et les paramètres associés.

Ainsi, chaque message transmis peut être signé avec des algorithmes différents permettant d'envoyer la même information à des destinataires n'utilisant pas les mêmes algorithmes cryptographiques.

Les paramètres additionnels 2 peuvent comprendre un compteur anti-rejeu.

Lorsque les paramètres additionnels 2 comprennent le compteur anti-rejeu, les paramètres additionnels 2 peuvent également comprendre une signature du compteur anti-rejeu.

Les contrôles de sécurité (intégrité et authenticité) effectués par les machines du réseau de communication utilisent le certificat de l'émetteur.

Toutes les machines impliquées dans les contrôles de sécurité peuvent être couvertes par une même autorité hiérarchique de certification racine (seul le certificat de l'autorité doit être connu de tous). Seuls les émetteurs de messages doivent disposer d'une clé privée.

Les messages sécurisés peuvent être transmis vers tous les interlocuteurs avec ou sans relayage du message.

Le protocole de multidiffusion peut être un protocole de contrôle, comme un protocole de contrôle du routage PIM, BSR, Auto-RP, IGMP, MLD, ou OSPF.

Le protocole de multidiffusion peut être un protocole de trafic, comme un protocole SYSLOG, ou VLC multicast.

Le protocole de communication ne nécessite aucun échange ou distribution de secret partagé préalable vers l'ensemble des machines. Les mécanismes de vérifications accompagnent chaque donnée échangée permettant de rendre la diffusion sécurisée autoporteuse (signalisation de sécurité intra bande ou "Inband" en langue anglaise)

Les paramètres additionnels 2 peuvent être ajoutés à l'entête existant du message ou dans un entête d'encapsulation.

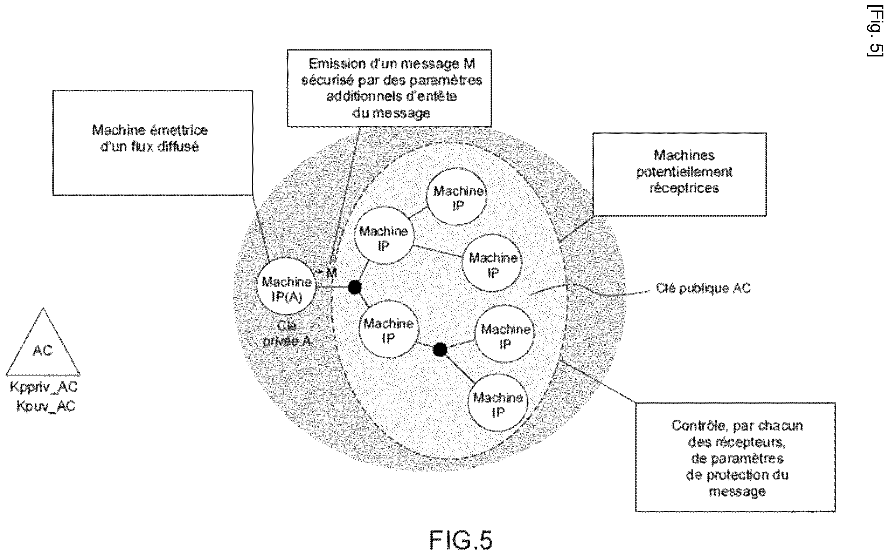

La [Fig.5] illustre schématiquement le routage dans un réseau de communication mettant en oeuvre le procédé selon un aspect de l'invention.

La présente invention permet notamment de :
- sécuriser des échanges de N vers M interlocuteurs sans service applicatif :
   comme la multidiffusion par routage d'information au sein de réseaux de communication ;
- éviter des échanges de secrets partagés préalables ;
- éviter des signalisations bidirectionnelles nécessaires à l'échange, des liaisons unidirectionnelles sont possibles ; et
- diffuser par routage IP multiple en mode dense.

## Revendications

1. Procédé de multidiffusion unidirectionnelle direct de messages (1) dans un réseau de communication mettant en oeuvre un protocole de multidiffusion unidirectionnelle direct, dans lequel on ajoute des paramètres additionnels (2) en entête d'un message basé sur le protocole de multidiffusion mis en oeuvre, les paramètres additionnels (2) comprenant :
- un type du protocole de multidiffusion ;
- une version du protocole de multidiffusion ;
- une protection assurée pour le message comprenant l'intégrité et l'authenticité et/ou la confidentialité et/ou l'anti-rejeu ;
- un type de certificat utilisé par l'émetteur du message ;
- une longueur du certificat ;
- un certificat de l'émetteur du message ;
- une longueur de la signature du message ; et
- une signature du message.

2. Procédé selon la revendication 1, dans lequel les paramètres additionnels (2) comprennent un type de message parmi un message nécessitant une sécurité ou non.

3. Procédé selon l'une des revendications précédentes, dans lequel les paramètres additionnels (2) comprennent, en cas d'utilisation d'une pluralité d'algorithmes cryptographiques l'identifiant de chaque algorithme cryptographique et les paramètres associés.

4. Procédé selon l'une des revendications précédentes, dans lequel les paramètres additionnels (2) comprennent un compteur anti-rejeu.

5. Procédé selon la revendication 4, dans lequel, les paramètres additionnels (2) comprenant le compteur anti-rejeu, les paramètres additionnels comprennent une signature du compteur anti-rejeu.

6. Procédé selon l'une des revendications précédentes, dans lequel des contrôles de sécurité effectués par des machines du réseau de communication utilisent un certificat d'une même autorité de certification.

7. Procédé selon l'une des revendications précédentes, dans lequel le protocole de multidiffusion est un protocole de contrôle du routage.

8. Procédé selon la revendication 7, dans lequel, le protocole de contrôle est un protocole PIM, ou BSR, ou Auto-RP, ou IGMP, ou MLD, ou OSPF.

9. Procédé selon l'une des revendications 1 à 6, dans lequel le protocole de multidiffusion est un protocole de trafic.

10. Procédé selon la revendication 9, dans lequel le protocole de trafic est un protocole SYSLOG, ou VLC multicast.
